# FASCICULE DE BREVET EUROPEEN

(11) **EP 4 085 749 B1**
(45) Date de publication et mention de la délivrance du brevet: **19.03.2025**
(21) Numéro de dépôt: 22171314.2
(22) Date de dépôt: 03.05.2022
(51) Int. Cl.: A01G 3/037, B26B 15/00

(54) **SÉCATEUR ÉLECTROPORTATIF**
ELEKTRISCHE UND TRAGBARE GARTENSCHERE
PORTABLE ELECTRIC SECATEURS

(30) Priorité: 04.05.2021 CH 4942021; 04.05.2021 FR 2104705
(43) Date de publication de la demande: 09.11.2022
(73) Titulaire: Felco SA, 2206 Les Geneveys-sur-Coffrane (CH)
(72) Inventeur: WINTER, Christophe, 1422 Grandson (CH); DI SANO, Jonathan, Staad, NPA 9422 (CH)
(74) Mandataire: P&TS SA (AG, Ltd.)

(56) Documents cités:
- FR-A1- 2 838 998
- JP-U- S 561 448

## Description

### Domaine technique

La présente invention concerne un sécateur électroportatif, notamment un sécateur électroportatif arrangé pour comprendre un système de sécurité nécessitant qu'au moins la lame mobile soit réalisée au moins en partie en matériau conducteur électrique.

### Etat de la technique

Un sécateur électroportatif est alimenté électriquement, en règle générale par une source d'alimentation autonome. Pendant son utilisation, il est porté par une main de l'utilisateur, qui permet également de le commander, par exemple à l'aide d'une gâchette.

La source d'alimentation d'un sécateur électroportatif peut être par exemple une batterie ou bien un pack de batteries. Dans ce cas, la source est en général une pièce séparée du sécateur électroportatif. En particulier l'utilisateur peut porter avec une main le sécateur électroportatif et simultanément porter sur lui, par exemple à l'aide d'un sac-à-dos, d'un harnais ou d'une ceinture, la source d'alimentation. Dans un autre cas, la source d'alimentation d'un tel sécateur électroportatif est dans l'outil électroportatif.

Un sécateur électroportatif comprend un actionneur pour transmettre une force à un objet externe sur lequel il agit, afin de le couper.

Un sécateur électroportatif comprend une contre-lame et une lame mobile. Une transmission relie l'actionneur à la lame mobile, de façon à permettre un déplacement de la lame mobile par rapport à la contre-lame. La lame mobile permet de couper un objet tel qu'une branche, et la contre-lame agit comme un organe de support, car elle supporte la branche pendant sa coupe. La contre-lame n'est pas en soi dangereuse pour l'utilisateur, car elle n'est pas coupante.

Ces sécateurs électroportatifs sont devenus de plus en plus efficaces et arrivent à générer une force de plusieurs kilo-Newtons. Cependant cette efficacité a augmenté de façon importante le nombre d'accidents professionnels causés par de tels sécateurs. Le besoin de sécurité par rapport au mouvement de la lame mobile de ces outils a donc augmenté rapidement.

Différents systèmes de sécurité dans l'état de la technique essaient de répondre à ce besoin. Notamment, plusieurs systèmes de sécurité dans l'état de la technique nécessitent qu'au moins la lame mobile soit réalisée au moins en partie en matériau conducteur électrique : en effet, lorsqu'une main (ou un membre, ou en général une portion du corps) de l'utilisateur touche cette lame mobile, et notamment sa portion en matériau conducteur électrique, ces systèmes sont arrangés pour modifier la vitesse de l'actionneur, par exemple afin de la réduire ou de l'annuler, et éventuellement déclencher une alarme (sonore et/ou visuelle). Dans la plupart des cas, un circuit électrique se ferme via la main (ou en général le corps) de l'utilisateur lorsqu'il touche cette lame mobile, et notamment sa portion en matériau conducteur électrique : cette fermeture est détectée de différentes façons, par exemple via une mesure d'une impédance.

Un exemple non-limitatif d'un tel système de sécurité est par exemple décrit dans le document FR3074403. Dans ce cas, le système de sécurité comprend une borne de référence, prévue pour être électriquement couplée au sécateur électroportatif et une borne de contact, prévue pour être électriquement couplée au corps d'un utilisateur, ainsi qu'un moyen de mesure d'un signal relatif à l'impédance entre ces bornes, de sorte à détecter un contact entre le corps de l'utilisateur et le sécateur électroportatif. Pour fonctionner, ce système prévoit que la lame mobile soit réalisée dans un matériau conducteur de l'électricité.

Un autre exemple non-limitatif d'un tel système de sécurité est par exemple décrit dans le document WO2013136311, qui prévoit également que la lame mobile soit réalisée dans un matériau conducteur de l'électricité. Dans ce cas, le système de sécurité comprend un élément électriquement conducteur situé sur la poignée du sécateur électroportatif, de manière à être en contact avec la main qui tient sécateur électroportatif et une ligne de circuit qui relie la lame mobile à cet élément électriquement conducteur. Un moyen de génération de puissance électrique et un moyen de détection de tension ou de courant sont disposés sur cette ligne de circuit. Des moyens de régulation sont prévus pour intervenir sur le circuit d'excitation, en réaction à une détection par le moyen de détection, lorsqu'une valeur seuil prédéterminée est dépassée, pour imposer l'arrêt du déplacement de la lame mobile. Cette valeur seuil est une valeur correspondant à une valeur détectée lorsque la lame mobile entre accidentellement en contact avec la main de l'utilisateur qui ne tient pas l'outil. Dans ce cas, le système de sécurité comprend également des moyens chaussants susceptibles d'être portés par l'utilisateur pour assurer une conductivité électrique entre au moins un des pieds de l'utilisateur et le sol.

Un autre exemple non-limitatif d'un tel système de sécurité est par exemple décrit dans le document FR3066357. Dans cette solution la lame mobile et la contre-lame sont en un matériau électriquement conducteur. Le système de sécurité comprend un premier câble de signal connecté à une unité électronique de commande et aux lames, et un deuxième câble de signal connecté à l'unité électronique de commande et une poignée en une matériau électriquement conducteur, qui est en contact avec la peau d'un utilisateur pendant l'utilisation du sécateur électroportatif. L'unité électronique de commande est configurée pour arrêter le fonctionnement de l'actionneur en cas de détection d'un flux de courant entre les lames et la poignée, transmis à travers le corps de l'utilisateur qui entre en contact avec une des lames avec sa main libre.

Cependant, si lors d'une coupe l'utilisateur qui manipule un de ces sécateurs électriques connus touche avec la tête de coupe un élément électriquement conducteur, par exemple un fil de palissage, il déclenche de façon involontaire le système de sécurité, même si ce contact n'est pas dangereux pour lui : cela cause l'arrêt du fonctionnement du sécateur électroportatif.

Si cette situation se produit souvent lors d'un travail de coupe, il arrive malheureusement que les utilisateurs, dérangés par ces arrêts inopinés ou faux, désactivent le fonctionnement du système de sécurité, en se mettant ainsi en danger.

Le document FR2838998 décrit un sécateur électrique comprenant un système de sécurité. Dans un mode de réalisation, la surface de support de la contre-lame comprend deux éléments électriquement conducteurs isolés entre eux par une pièce isolante et ayant des tensions différentes. Lorsqu'un corps conducteur touche la contre-lame, il court-circuite les deux éléments électriquement conducteurs, en déclenchant ainsi le système de sécurité.

Le document JPS561448U décrit un sécateur ayant la lame mobile et la contre-lame revêtues en plastique pour rendre plus fluide le mouvement de la lame mobile.

### Bref résumé de l'invention

Un but de la présente invention est de proposer un sécateur électroportatif exempt des limitations des sécateurs électroportatifs connus.

Un autre but de la présente invention est de proposer un sécateur électroportatif qui réduise voire annule de faux déclenchements de son système de sécurité.

Un autre but de la présente invention est de proposer un sécateur électroportatif qui garantisse encore plus la sécurité de l'utilisateur par rapport aux solutions connues.

Selon l'invention, ces buts sont atteints au moyen du sécateur électroportatif selon la revendication 1.

Le sécateur électroportatif selon l'invention comprend :
- un actionneur,
- une transmission reliant l'actionneur à une lame mobile, de façon à permettre un déplacement de la lame mobile par rapport à une contre-lame,
- la lame mobile,
- la contre-lame, cette contre-lame comprenant une surface de support arrangée pour entrer en contact avec un objet et pour coopérer avec la lame mobile pour que cet objet soit coupé lors de l'utilisation du sécateur.

Le sécateur électroportatif selon l'invention est arrangé pour comprendre un système de sécurité pour l'utilisateur de ce sécateur électroportatif, ce système de sécurité nécessitant qu'au moins la lame mobile soit réalisée au moins en partie en matériau conducteur électrique.

Selon l'invention, au moins une portion d'une surface de la contre-lame est en matériau isolant électrique.

Grâce à cette portion de la contre-lame en matériau isolant électrique, si un corps en matériau conducteur entre en contact avec cette portion, il ne déclenche pas le système de sécurité du sécateur électroportatif. En effet, le matériau conducteur ne permet pas un passage de charge nécessaire pour ce déclanchement.

Selon l'invention, cette surface de la contre-lame en matériau isolant électrique est une surface opposée à la surface de support. Cette caractéristique est avantageuse lorsque le sécateur électroportatif est utilisé pour couper un objet, par exemple une branche, lié à un élément conducteur électrique, par exemple un fil métallique de palissage, en insérant la contre-lame entre l'objet et le fil. En l'absence de ce matériau isolant, le fil métallique de palissage aurait déclenché le système de sécurité, sans qu'il y avait un réel danger pour l'utilisateur. Grâce à la présence du matériau isolant électrique sur au moins une portion de la surface opposée à la surface de support, ce déclanchement n'a pas lieu : l'utilisateur peut ainsi continuer son travail, sans désactiver le système de sécurité et en n'étant pas en danger.

Dans un mode de réalisation, une portion d'une surface latérale de la contre-lame est en matériau isolant électrique. Cette surface est sensiblement perpendiculaire à la surface de support et/ou à la surface opposée à la surface de support.

Dans un mode de réalisation, cette surface de la contre-lame en matériau isolant électrique est (au moins) un chanfrein de la contre-lame.

Dans un mode de réalisation, le chanfrein est adjacent à la surface de la contre-lame opposée à la surface de support.

Dans un mode de réalisation, toute la contre-lame est en matériau isolant électrique.

Dans un mode de réalisation, au moins une portion de la surface de support est en matériau conducteur électrique. Ce mode de réalisation est avantageux lorsqu'un élément conducteur électrique, par exemple un fil métallique de palissage, se trouve entre la lame mobile et la contre-lame, souvent sans que l'utilisateur s'en rende compte: dans ce cas, puisqu'au moins une portion de la surface de support est en matériau conducteur électrique, le système de sécurité se déclenche, non pas pour garantir la sécurité de l'utilisateur, qui n'est pas mise en danger, mais pour éviter de couper un tel élément conducteur électrique. Ceci évite d'endommager involontairement l'infrastructure du domaine.

Dans un mode de réalisation, au moins une partie de la contre-lame et/ou de la lame est réfléchissante et/ou a une couleur fluorescente. Cela permet de rendre plus visible la tête de coupe à l'utilisateur lorsqu'il manipule le sécateur électroportatif et d'augmenter donc sa sécurité.

Dans un mode de réalisation, la portion de la surface de la contre-lame en matériau isolant électrique est réalisée dans au moins un des matériaux isolants électriques suivants : céramique, polymère, tissu, émail, vernis, laque, pierre, verre.

Dans un mode de réalisation, la portion de la surface de la contre-lame comprend un revêtement en matériau isolant électrique réalisé par PVD (Physical Vapour Deposition) et/ou par CVD (Chemical Vapor Deposition).

### Brève description des figures

Des exemples de mise en œuvre de l'invention sont indiqués dans la description illustrée par les figures annexées dans lesquelles :
La figure 1 illustre un exemple d'un système comprenant un mode de réalisation de l'outil électroportatif selon l'invention.
La figure 2 illustre une première vue latérale d'un mode de réalisation d'une tête de coupe de l'outil électroportatif selon l'invention, en position fermée.
La figure 3 illustre une première vue latérale de la tête de coupe de la figure 2, en position ouverte.
La figure 4 illustre une deuxième vue latérale de la tête de coupe de la figure 2, en position ouverte.
La figure 5 illustre une vue en perspective d'un mode de réalisation de la tête de coupe de l'outil électroportatif selon l'invention en position ouverte, avec un objet à l'intérieur de la tête de coupe et un élément conducteur électrique au-dessous de la contre-lame.
La figure 6 illustre une vue en perspective de la tête de coupe de la figure 5, avec à la fois un objet et un élément conducteur électrique à l'intérieur de la tête de coupe.
La figure 7 illustre une première vue en perspective d'un mode de réalisation de la contre-lame de l'outil électroportatif selon l'invention.
La figure 8 illustre une deuxième vue en perspective de la contre-lame de la figure 7.
La figure 9 illustre une troisième vue en perspective de la contre-lame de la figure 7.

### Exemple(s) de mode(s) de réalisation de l'invention

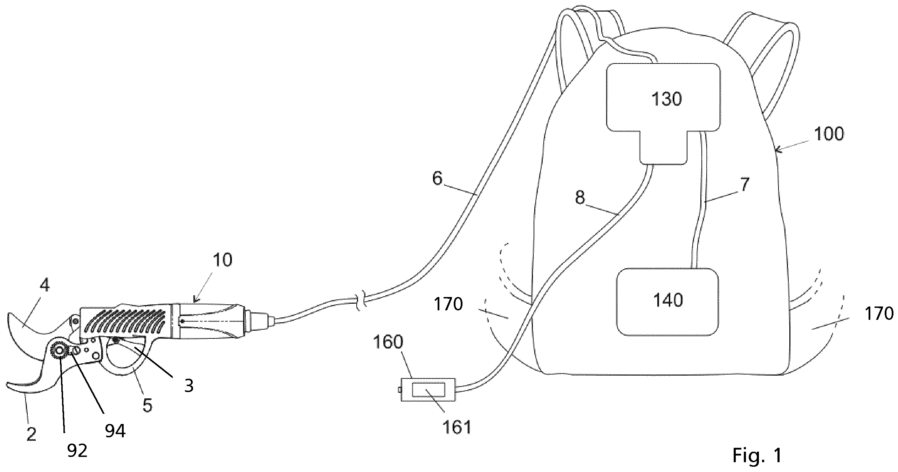

La figure 1 illustre un exemple d'un système comprenant un mode de réalisation du sécateur électroportatif 10 selon l'invention. Cet outil est arrangé pour être porté par un utilisateur, par exemple par un membre de l'utilisateur tel qu'une main. Dans une variante, cette même main permet de commander l'outil 10 via un dispositif de commande, par exemple une gâchette 3. Dans ce cas, le sécateur électroportatif 10 comprend un corps 5, une lame mobile 4 et une contre-lame 2.

La lame mobile 4 permet de couper un objet et entre en contact direct avec cet objet. Elle est mobile pendant la coupe de l'objet et actionné par un actionneur (non illustré) du sécateur électroportatif 10, par exemple et de façon non limitative un moteur électrique.

La contre-lame 2 supporte l'objet pendant sa coupe et elle n'est pas mobile par rapport au corps 5 du sécateur électroportatif 10 pendant la coupe de l'objet. La contre-lame 2 n'est pas actionnée par l'actionneur du sécateur électroportatif 10. Sa présence est nécessaire pour réaliser la coupe. La contre-lame 2, et notamment sa surface de support, entre également en contact direct avec cet objet pendant la coupe.

Dans l'exemple de la figure 1, le sécateur électroportatif 10 est relié par un élément de connexion 6, un câble dans l'exemple de la figure 1, à un boîtier de commande 130 du sécateur électroportatif 10, placé dans un moyen de soutien 100 porté par l'utilisateur, dans l'exemple un sac-à-dos. Ce boîtier de commande 130 est relié via l'élément de connexion 7 à une ou plusieurs batteries 140 dans le même moyen de soutien 100, et via l'élément de connexion 8 à un boîtier déporté 160, qui peut comprendre un affichage 161, et qui est en général placé sur une ceinture 170 portée par l'utilisateur. Dans l'exemple illustré, la ceinture 200 fait partie du sac-à-dos 100.

L'exemple de la figure 1 ne doit pas être considéré limitatif et d'autres variantes peuvent être imaginées, par exemple le remplacement d'au moins un des éléments de connexion filaires 6 à 8 par un élément de connexion sans fils ou « wireless », l'intégration du boîtier de commande 130 et/ou de la ou des batteries 140 dans le corps 5 de l'outil, et/ou l'absence d'un boîtier déporté 160, etc.

Le sécateur électroportatif 10 comprend également une transmission (non illustrée) reliant l'actionneur (non illustré) du sécateur électroportatif 10 à la lame mobile 4, de façon à permettre un déplacement de la lame mobile 4 par rapport à la contre-lame 2.

Des exemples non limitatifs de transmission comprennent un système vis-à-bille/écrou, dans lequel la vis se déplace avec un mouvement de translation et l'écrou tourne avec un mouvement de rotation et/ou dans lequel la vis qui se déplace avec un mouvement de rotation et l'écrou se déplace avec un mouvement de translation, des bielles, des cames, etc.

Selon l'invention, le sécateur électroportatif 10 est arrangé pour comprendre un système de sécurité (non illustré) pour ce sécateur électroportatif 10, ce système de sécurité nécessitant qu'au moins la lame mobile 4 soit réalisée au moins en partie en matériau conducteur électrique.

En effet, lorsqu'une main (ou un membre ou en général une portion du corps) de l'utilisateur touche cette lame mobile 4, et notamment sa portion en matériau conducteur électrique, le système de sécurité est arrangé pour modifier la vitesse de l'actionneur, par exemple la réduire, l'inverser ou l'annuler, effectuer un mouvement de réouverture, et éventuellement déclencher une alarme (sonore et/ou visuelle). Dans la plupart des cas, un circuit électrique se ferme via la main (ou en général le corps) de l'utilisateur lorsqu'il touche cette lame mobile 4, et notamment sa portion en matériau conducteur électrique : cette fermeture est détectée de différentes façons par une unité de détection et cette détection permet de réduire, inverser ou annuler la vitesse de l'actionneur, en évitant ainsi des accidents graves à l'utilisateur.

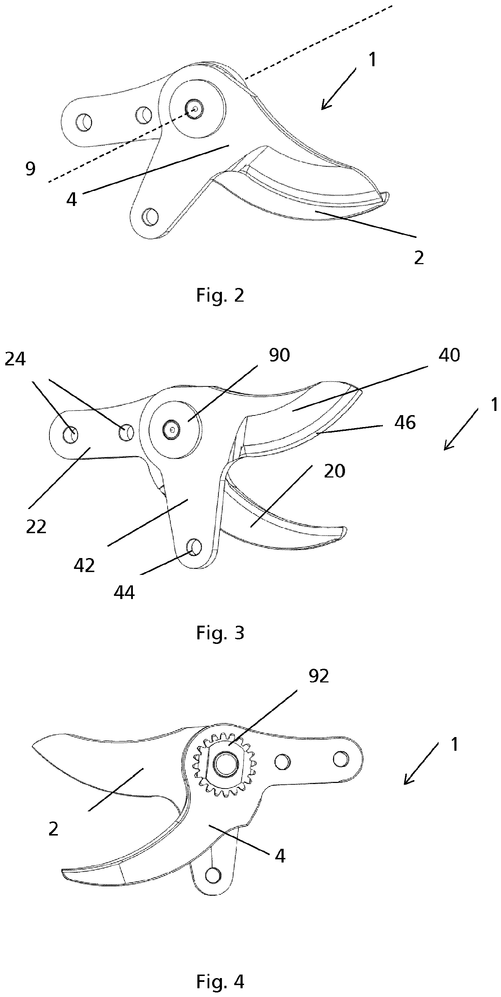

La figure 2 illustre une première vue latérale d'un mode de réalisation d'une tête de coupe 1 de l'outil électroportatif selon l'invention, en position fermée. La figure 3 illustre une première vue latérale de la tête de coupe 1 de la figure 2, en position ouverte. La figure 4 illustre une deuxième vue latérale de la tête de coupe 1 de la figure 2, en position ouverte. Les figures 2 à 4 illustrent un mode de réalisation non limitatif de l'invention.

Comme visible sur les figures 2 à 4, la lame mobile 4 et la contre-lame 2 sont superposées l'une sur l'autre et connectées par des moyens de connexion, dans l'exemple un boulon 90 qui coopère avec une douille (non illustrée), et un écrou denté 92. L'écrou denté 92 peut coopérer avec un secteur denté 94, visible sur la figure 1, de façon connue. Ces moyens de connexion sont au moins en partie reçus par des trous traversants de la lame mobile 4 et de la contre-lame 2, qui sont alignés lors de la superposition des deux lames. La lame mobile 4 est arrangée pour pivoter par rapport à la contre-lame 2 autour de l'axe de rotation 9, qui traverse ces moyens de connexion.

La lame mobile 4 comprend une portion coupante 40 et une portion d'actionnement 42, les deux portions s'étendant depuis les moyens de connexion 90, 92 et formant un angle entre elles, d'environ 90° dans l'exemple illustré sur les figures 2 à 4.

Dans l'exemple des figures 2 à 4, la portion d'actionnement 42 de la lame mobile 4 comprend un moyen de liaison avec la transmission du sécateur électroportatif 10, un trou 44 dans l'exemple illustré. La transmission, via ce moyen, pousse la portion d'actionnement 42, en causant ainsi la rotation de la lame mobile 4 autour de l'axe de rotation 9. Lors de cette rotation, la partie coupante 40 peut s'éloigner de la contre-lame 2 (figures 3 et 4), en permettant ainsi à l'utilisateur d'insérer un objet à couper dans l'espace qui se crée entre la partie coupante 40 et la contre-lame 2, et ensuite peut s'approcher à la contre-lame 2 (figure 2), en réalisant ainsi la coupe de l'objet. La partie coupante 40 de la lame mobile 4 comprend en effet un bord aiguisé 46, qui permet cette coupe.

La partie coupante 40 de la lame mobile des figures 2 à 4 a une forme de bec, légèrement courbée. Cependant d'autres formes peuvent être envisagées. L'extrémité libre de la partie coupante 40 dans le plan d'une surface latérale de la lame mobile 4 a une largeur plus grande par rapport à la largeur de la partie coupante en correspondance des moyens de connexion 90, 92. En d'autres mots, la partie coupante 40 a une section dans le plan d'une surface latérale de la lame mobile 4 sensiblement triangulaire.

Bien que dans les exemples des figures 2 à 4 la lame-mobile n'est pas plate, dans d'autres exemples (non illustrés) elle peut être plate.

La lame mobile 4 est réalisée au moins en partie, et souvent complétement, dans un matériau conducteur électrique, par exemple et de façon non limitative en acier ou en acier trempé.

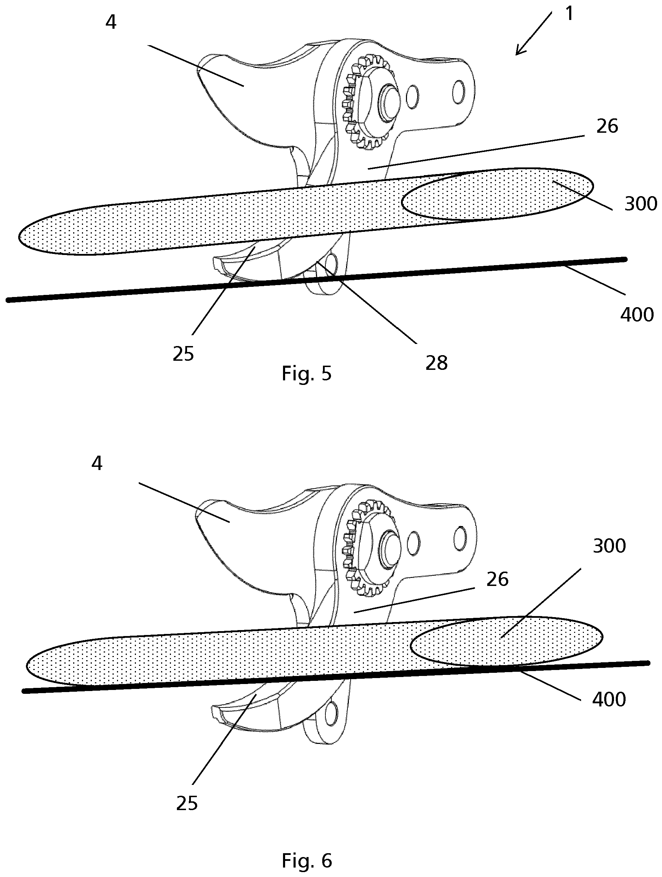

La contre-lame 2 comprend une portion de support 20 et une portion de fixation 22, les deux portions s'étendant depuis les moyens de connexion et formant un angle entre elles, plus grand que 90° dans l'exemple illustré sur les figures 2 à 4. La portion de support 20 permet de supporter un objet à couper pendant la coupe et entre au moins en partie en contact direct avec cet objet. La portion de support 20 comprend une surface de support 25, visible par exemple sur les figures 5 et 6, qui supporte l'objet à couper (référence 300 sur les figures 5 et 6) pendant la coupe et entre au moins en partie en contact direct avec cet objet 300. Cette surface de support 25 est sensiblement perpendiculaire aux surfaces latérales de la contre-lame (une surface latérale 26 est par exemple visible sur les figures 5 et 6).

La portion de fixation 22 permet de fixer la contre-lame2 au corps 5 du sécateur électroportatif 10, afin de rendre solidaire le corps 5 à la contre-lame 2.

Dans l'exemple des figures 2 à 4, la portion de fixation 22 de la contre-lame 2 comprend des moyens de fixation de la contre-lame 2 avec le corps 5 du sécateur électroportatif 10, deux trous 24 dans l'exemple illustré. La portion de fixation 22 peut comprendre une borne (non illustrée) qui appartient au système de sécurité du sécateur électroportatif 10.

La partie de support 20 de la contre-lame des figures 2 à 4 a une forme de crochet, légèrement courbée. Cependant d'autres formes peuvent être envisagées. L'extrémité libre de la partie de support 20 dans le plan d'une surface latérale de la contre-lame 2 a une largeur plus grande par rapport à la largeur de la partie de support en correspondance des moyens de connexion 90, 92. En d'autres mots, la partie de support 20 a une section dans le plan d'une surface latérale de la contre-lame 2 sensiblement triangulaire.

Bien que dans les exemples des figures 2 à 4 la contre-lame 2 n'est pas plate, dans d'autres exemples elle peut être plate.

Selon l'invention, au moins une portion d'une surface de la contre-lame 2 est en matériau isolant électrique. Dans un mode de réalisation, cette portion est réalisée dans au moins un des matériaux isolants électriques suivants : céramique, polymère, tissu, émail, vernis, laque, pierre, verre. Dans un autre mode de réalisation, cette portion comprend un revêtement en matériau isolant électrique réalisé par PVD et/ou par CVD. La portion restante de la contre-lame est en règle générale réalisée dans un matériau conducteur électrique, notamment le même que celui utilisé pour la lame mobile 4.

Selon l'invention, cette surface de la contre-lame 2 en matériau isolant électrique est une surface 28 opposée à la surface de support 25. Au moins une portion de la surface de support 25 est sensiblement parallèle à au moins une portion de la surface 28 opposée à la surface de support 25.

Cette caractéristique est avantageuse lorsque le sécateur électroportatif 10 est utilisé pour couper un objet 300, par exemple une branche, lié à un élément (par exemple filaire) conducteur électrique 400, par exemple un fil métallique de palissage, en insérant la contre-lame 2 entre l'objet 300 et le fil 400, comme illustré sur la figure 5. Ce fil de palissage est en général connecté via des piquets (métalliques) de palissage à la terre. En l'absence de ce matériau isolant, le fil métallique de palissage 400 aurait déclenché le système de sécurité, sans qu'il y avait un réel danger pour l'utilisateur. Grâce à la présence du matériau isolant électrique sur au moins une portion de la surface 28 opposée à la surface de support 25, ce déclanchement n'a pas lieu : l'utilisateur peut ainsi continuer son travail, sans devoir désactiver manuellement le système de sécurité et en n'étant pas en danger.

Dans un mode de réalisation, au moins une portion de la surface de support 25 est en matériau conducteur électrique. Ce mode de réalisation est avantageux lorsqu'un élément (filaire) conducteur électrique 400, par exemple un fil métallique de palissage, se trouve entre la lame mobile 4 et la contre-lame 2, souvent sans que l'utilisateur s'en rende compte, comme illustré sur la figure 6. Dans l'exemple de la figure 6, l'utilisateur pense seulement saisir l'objet 300 à couper, et il ne se rend pas compte qu'au-dessous de cet objet 300 il y a un fil de palissage 400 en contact avec la surface de support 25. Dans ce cas, puisqu'au moins une portion de la surface de support 25 est en matériau conducteur électrique, le système de sécurité se déclenche, non pas pour garantir la sécurité de l'utilisateur, qui n'est pas mise en danger, mais pour éviter de couper un tel élément conducteur électrique 400.

Dans un mode de réalisation, au moins une portion d'une surface latérale (références 26 et/ou 27, sur les figures 5 à 9) de la contre-lame 2 est en matériau isolant électrique. Cette surface est sensiblement perpendiculaire à la surface de support 25 et/ou à la surface 28 opposée à la surface de support 25.

Dans un mode de réalisation, au moins une partie de la contre-lame 2 et/ou de la lame 4 est réfléchissante et/ou a une couleur fluorescente. Cela permet de rendre plus visible la tête de coupe 1 à l'utilisateur lorsqu'il manipule le sécateur électroportatif 10 et d'augmenter donc sa sécurité.

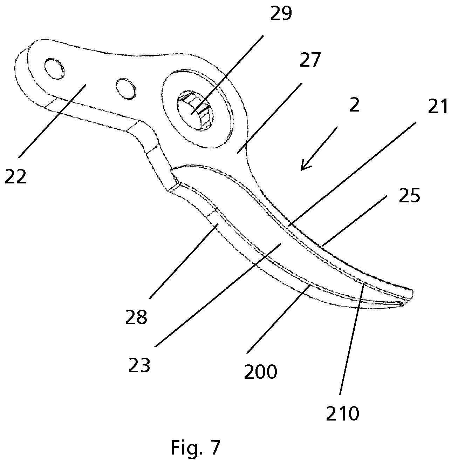

Les figure 7 à 9 illustrent des vues en perspective d'un mode de réalisation de la contre-lame 2. Dans ce mode de réalisation, il est possible de voir le trou traversant 29 de la contre-lame, qui permet sa liaison à la lame mobile 4 via les moyens de connexion 90, 92.

Dans ce mode de réalisation, la surface latérale 27 destinée à entrer en contact avec la lame mobile 4 lors de son déplacement n'est pas plate, mais comprend un essui-sève (ou essui-lame ou « sap groove ») 21, qui permet de réduire la surface de frottement entre la lame et la contre-lame sans risque de collage des lames, par exemple lors de la coupe de végétaux en sève. Il fait gagner du temps et facilite la taille en éliminant les saletés et la sève après chaque mouvement de coupe. L'essui-sève 21 est la partie de la contre-lame 2 qui frotte contre la lame mobile 4 lors de son déplacement. Il est adjacent à une autre surface 23 (moins épaisse), qui n'entre pas en contact avec la lame mobile 4 lors de son déplacement.

Dans un mode de réalisation, cette surface de la contre-lame 2 en matériau isolant électrique est (au moins) un chanfrein 200, 210, 220 de la contre-lame 2.
Dans ce contexte, le terme « chanfrein » indique une surface obtenue en supprimant l'arête d'une lame. Il est un biseau, qui peut être arrondi, et dont la fonction est celle d'éviter des arêtes vives.

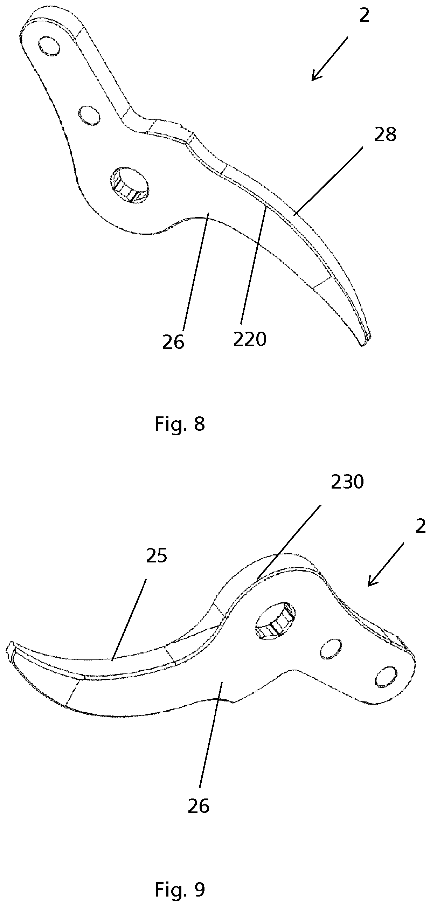

Dans un mode de réalisation, le chanfrein en matériau isolant électrique est au moins un chanfrein adjacent à la surface 28 de la contre-lame 2 opposée à la surface de support 25 (référence 200 sur la figure 7 et/ou référence 220 sur la figure 8).

Dans un mode de réalisation, le chanfrein en matériau isolant électrique est celui entre l'essui-sève 21 et sa surface adjacente 23 (référence 210 sur la figure 7).

Dans un mode de réalisation, le(s) chanfrein(s) adjacent(s) à la surface de support 25 sont réalisés en matériau conducteur électrique (référence 230 sur la figure 9).

Dans une variante, la contre-lame 2 du sécateur électroportatif 10 est fabriquée avec la méthode de fabrication suivante :
- fournir une contre-lame 2 en matériau conducteur électrique,
- revêtir la contre-lame 2 avec du matériau isolant électrique,
- enlever ce revêtement dans certains zones ou surfaces de la contre-lame 2.

Ce revêtement peut être réalisé par trempage de la contre-lame 2, par exemple en la suspendant via son trou 29 de connexion avec la lame mobile 4. Le revêtement en matériau isolant électrique peut être réalisé par PVD (Physical Vapour Deposition) et/ou par CVD (Chemical Vapor Deposition).

Dans une variante, la contre-lame 2 du sécateur électroportatif 10 est fabriquée avec la méthode de fabrication suivante :
- fournir une contre-lame 2 en matériau conducteur électrique,
- revêtir une portion d'une surface de la contre-lame 2 avec du matériau isolant électrique, par exemple via une étape de vernissage.

Dans les deux variantes, l'épaisseur de ces revêtements en règle générale n'a pas de limites, car la contre-lame 2 est une zone « inactive » du sécateur électroportatif 10. Cependant, afin de réduire son encombrement, elle ne doit pas être trop grande ; elle ne doit pas être non plus trop fine, à cause de l'usure par frottement. Dans une variante, cette épaisseur est inférieure ou égale à 1 millimètre.

Dans une autre variante, la contre-lame 2 du sécateur électroportatif 10 est fabriquée avec la méthode de fabrication suivante :
- fournir une première portion de la contre-lame 2 en matériau conducteur électrique,
- fournir une deuxième portion 2 de la contre-lame en matériau isolant électrique,
- assembler les deux portions.

### Numéros de référence employés sur les figures

- 1: Tête de coupe
- 2: Contre-lame
- 3: Gâchette
- 4: Lame mobile
- 5: Corps de l'utilisateur
- 6: Elément de connexion
- 7: Elément de connexion
- 8: Elément de connexion
- 9: Axe de pivotement
- 20: Portion de support de la contre-lame 2
- 21: Essui-sève
- 22: Portion de fixation de la contre-lame 2
- 23: Surface adjacente à l'essui-sève 21
- 24: Trou de connexion avec le corps 5
- 25: Surface de support de la contre-lame 2
- 26: Surface latérale de la contre-lame 2
- 27: Surface latérale de la contre-lame 2
- 28: Surface opposée à la surface de support 25
- 29: Trou traversant de la contre-lame 2
- 40: Portion coupante de la lame mobile 4
- 42: Portion d'actionnement de la lame mobile 4
- 44: Trou de connexion avec la transmission
- 46: Bord aiguisé de la lame mobile 4
- 90: Boulon
- 92: Ecrou denté
- 94: Secteur denté
- 100: Moyen de soutien (sac-à-dos)
- 130: Boîtier de commande
- 140: Batterie(s)
- 160: Boîtier déporté
- 161: Affichage
- 170: Ceinture
- 200: Chanfrein
- 210: Chanfrein
- 220: Chanfrein
- 230: Chanfrein
- 300: Objet à couper
- 400: Elément (par exemple filaire) conducteur électrique

## Revendications

1. Sécateur électroportatif (10) comprenant :
- un actionneur,
- une transmission reliant l'actionneur à une lame mobile (4), de façon à permettre un déplacement de la lame mobile (4) par rapport à une contre-lame (2),
- la lame mobile (4),
- la contre-lame (2),
ladite contre-lame (2) comprenant une surface de support (25) arrangée pour entrer en contact avec un objet (300) et pour coopérer avec la lame mobile (4) pour que ledit objet (300) soit coupé lors de l'utilisation du sécateur électroportatif (10),
ledit sécateur électroportatif (10) étant arrangé pour comprendre un système de sécurité pour un utilisateur dudit sécateur électroportatif (10), ledit système de sécurité nécessitant qu'au moins la lame mobile (4) soit réalisée au moins en partie en matériau conducteur électrique,
au moins une portion d'une surface de la contre-lame (2) est en matériau isolant électrique
**caractérisé en ce que**
ladite surface de la contre-lame étant une surface (28) opposée à ladite surface de support (25).

2. Sécateur électroportatif (10) selon la revendication 1, au moins une portion d'une surface latérale (26, 27) de la contre-lame (2) étant en matériau isolant électrique.

3. Sécateur électroportatif (10) selon l'une des revendications 1 à 2, la contre-lame (2) comprenant au moins un chanfrein (200, 210, 220), ledit au moins un chanfrein (200, 210, 220) étant en matériau isolant électrique.

4. Sécateur électroportatif (10) selon la revendication 3, ledit chanfrein (200, 220) étant adjacent à une surface (28) de la contre-lame opposée à ladite surface de support (25).

5. Sécateur électroportatif (10) selon l'une des revendications 1 à 4, au moins une portion de la surface de support (25) étant en matériau conducteur électrique.

6. Sécateur électroportatif (10) selon l'une des revendications 1 à 5, au moins une partie de la contre-lame (2) étant réfléchissante et/ou ayant une couleur fluorescente.

7. Sécateur électroportatif (10) selon l'une des revendications 1 à 6, au moins une partie de la lame mobile (4) étant réfléchissante et/ou ayant une couleur fluorescente.

8. Sécateur électroportatif (10) selon l'une des revendications 1 à 7, ladite portion de ladite surface de la contre-lame (2) étant réalisée dans au moins un des matériaux isolants électriques suivants : céramique, polymère, tissu, émail, vernis, laque, pierre, verre.

9. Sécateur électroportatif (10) selon l'une des revendications 1 à 8, ladite portion de ladite surface de la contre-lame (2) comprenant un revêtement en matériau isolant électrique réalisé par PVD (Physical Vapour Deposition) et/ou par CVD (Chemical Vapour Deposition).

## Patentansprüche

1. Tragbare elektrische Gartenschere (10), umfassend:
- einen Aktuator,
- ein Getriebe, welches den Aktuator mit einer beweglichen Schneide (4) verbindet, um eine Bewegung der beweglichen Schneide (4) in Bezug auf eine Gegenschneide (2) zu ermöglichen,
- die bewegliche Schneide (4),
- die Gegenschneide (2),
wobei die besagte Gegenschneide (2) eine Stützfläche (25) umfasst, welche derart angeordnet ist, um mit einem Gegenstand (300) in Kontakt zu kommen, und um mit der beweglichen Schneide (4) zusammenzuwirken, so dass der besagte Gegenstand (300) bei der Verwendung der tragbaren elektrischen Gartenschere (10) geschnitten wird,
wobei die besagte tragbare elektrische Gartenschere (10) derart ausgelegt ist, um ein Sicherheitssystem für einen Benutzer der besagten tragbaren elektrischen Gartenschere (10) umfasst, wobei das besagte Sicherheitssystem erfordert, dass zumindest die bewegliche Schneide (4) zumindest teilweise aus elektrisch leitendem Material besteht,
wobei zumindest ein Teil einer Oberfläche der Gegenschneide (2) aus elektrisch isolierendem Material besteht,
**dadurch gekennzeichnet, dass**
die besagte Oberfläche der Gegenschneide eine der besagten Stützfläche (25) entgegengesetzte Oberfläche (28) ist.

2. Tragbare elektrische Gartenschere (10) gemäss Anspruch 1, wobei zumindest ein Teil einer Seitenfläche (26, 27) der Gegenschneide (2) aus elektrisch isolierendem Material beseht.

3. Tragbare elektrische Gartenschere (10) gemäss einem der Ansprüche 1 bis 2, wobei die Gegenschneide (2) zumindest eine Fase (200, 210, 220) umfasst, wobei die zumindest eine Fase (200, 210, 220) aus elektrisch isolierendem Material beseht.

4. Tragbare elektrische Gartenschere (10) gemäss Anspruch 3, wobei die besagte Fase (200, 220) an eine Oberfläche (28) der Gegenschneide gegenüber der besagten Stützfläche (25) angrenzt.

5. Tragbare elektrische Gartenschere (10) gemäss einem der Ansprüche 1 bis 4, wobei zumindest ein Teil der Stützfläche (25) aus elektrisch leitfähigem Material besteht.

6. Tragbare elektrische Gartenschere (10) gemäss einem der Ansprüche 1 bis 5, wobei zumindest ein Teil der Gegenschneide (2) reflektierend ist und/oder eine fluoreszierende Farbe aufweist.

7. Tragbare elektrische Gartenschere (10) gemäss einem der Ansprüche 1 bis 6, wobei zumindest ein Teil der beweglichen Schneide (4) reflektierend ist und/oder eine fluoreszierende Farbe aufweist.

8. Tragbare elektrische Gartenschere (10) gemäss einem der Ansprüche 1 bis 7, wobei der besagte Teil der besagten Oberfläche der Gegenschneide (2) aus mindestens einem der folgenden elektrisch isolierenden Materialien besteht: Keramik, Polymer, Stoff, Emaille, Firnis, Lack, Stein, Glas.

9. Tragbare elektrische Gartenschere (10) gemäss einem der Ansprüche 1 bis 8, wobei der besagte Teil der Oberfläche der besagten Gegenschneide (2) eine durch PVD (Physikalische Gasphasenabscheidung) und/oder CVD (Chemische Gasphasenabscheidung) hergestellte Beschichtung aus elektrisch isolierendem Material aufweist.

## Claims

1. Hand-held electric pruning shears (10) comprising:
- an actuator,
- a transmission connecting the actuator to a movable blade (4), so as to allow movement of the movable blade (4) relative to a counter-blade (2),
- the movable blade (4),
- the counter-blade (2),
said counter-blade (2) comprising a support surface (25) arranged to come into contact with an object (300) and to cooperate with the movable blade (4) so that said object (300) is cut during use of the hand-held electric pruning shears (10),
said hand-held electric pruning shears (10) being arranged to comprise a safety system for a user of said electroportable pruning shears (10), said safety system requiring at least the movable blade (4) to be made at least in part of electrically conductive material,
at least a portion of a surface of the counter-blade (2) being made of electrically insulating material,
**characterised in that**
said surface of the counter-blade being a surface (28) opposite said support surface (25).

2. Hand-held electric pruning shears (10) according to claim 1, at least a portion of a lateral surface (26, 27) of the counter-blade (2) being made of electrically insulating material.

3. Hand-held electric pruning shears (10) according to one of claims 1 to 2, the counter-blade (2) comprising at least one chamfer (200, 210, 220), said at least one chamfer (200, 210, 220) being made of electrically insulating material.

4. Hand-held electric pruning shears (10) according to claim 3, said chamfer (200, 220) being adjacent to a surface (28) of the counter-blade opposite said support surface (25).

5. Hand-held electric pruning shears (10) according to one of claims 1 to 4, at least a portion of the support surface (25) being made of electrically conductive material.

6. Hand-held electric pruning shears (10) according to one of claims 1 to 5, at least part of the counter-blade (2) being reflective and/or having a fluorescent colour.

7. Portable electric pruning shears (10) according to one of claims 1 to 6, at least part of the movable blade (4) being reflective and/or having a fluorescent colour.

8. Hand-held electric pruning shears (10) according to one of claims 1 to 7, said portion of said surface of the counter-blade (2) being made of at least one of the following electrically insulating materials: ceramic, polymer, fabric, enamel, varnish, lacquer, stone or glass.

9. Hand-held electric pruning shears (10) according to one of claims 1 to 8, the said portion of the said surface of the counter-blade (2) comprising a coating of electrically insulating material produced by PVD (Physical Vapour Deposition) and/or by CVD (Chemical Vapour Deposition).
